# NEW EUROPEAN PATENT SPECIFICATION

(11) **EP 0 256 753 B2**
(45) Date of publication and mention of the opposition decision: **28.08.1996**
(45) Mention of the grant of the patent: 03.11.1993
(21) Application number: 87306898.5
(22) Date of filing: 04.08.1987
(51) Int. Cl.: G11B 20/00, H04N 5/91

(54) **Method and apparatus for preventing the copying of a video program**
Verfahren und Gerät zur Verhinderung des Kopierens eines Video-Programms
Méthode et appareil pour empêcher la copie d'un programme vidéo

(30) Priority: 11.08.1986 US 895045; 17.10.1986 US 920684
(43) Date of publication of application: 24.02.1988
(73) Proprietor: MACROVISION CORPORATION, San Jose California 95129 (US)
(72) Inventor: Ryan, John O., Cupertino California 95014 (US)
(74) Representative: Needle, Jacqueline

(56) References cited:
- WO-A-84/03166
- WO-A-85/02293
- AU-B- 536 261
- AU-B-64 411 180
- GB-A- 2 104 701
- JP-A- 6 012 660
- US-A- 3 963 865
- US-A- 4 030 128
- US-A- 4 100 575
- US-A- 4 163 253

## Description

This invention relates to a method and apparatus for prohibiting the recording of video signals.

Various apparatus and methods have been developed for modifying a video signal so that a normal colour picture may be produced by a television receiver receiving the modified video signal, but that video recording of the modified video signal is impaired. That is, a video picture produced from the video signal as recorded on a video tape recorder is altered so that it makes unacceptable viewing.

United States patent No. 4,631,603 to John O. Ryan issued December 23, 1986, entitled "Method and Apparatus for Processing a Video Signal so as to Prohibit the Making of Acceptable Video Tape Recordings Thereof", discloses such a method and apparatus. It describes adding ordered pairs of pseudo-sync pulses and white pulses to the back porch of a blanking interval. These pulse pairs act in concert to confuse the automatic gain control system of a video cassette recorder (VCR), leading to generally unviewable pictures.

US-A-4,163,253 (Morio) also discloses a method and apparatus for altering the automatic gain control of a VCR. More particularly, this US specification discloses a method of recording video signals arranged such that unmodified video signals are recorded, whereas recording of modified video signals is inhibited, the modified video signals having a selected waveform added to a blanking interval, the method comprising the steps of receiving video signals in a video signal recording device, and detecting the presence of said added selected waveform to inhibit recording.

GB-A-2,104,701 (King) discloses a similar method in which the gain of the recorder is interfered with in response to the receipt of a modified signal. This specification additionally suggests the addition of spoiler signals to the output.

US-A-3 963 865 discloses a method of modifying the vertical sync pulses such that upon playback of an unauthorized copy on a receiver the video image is eliminated or substantially distorted.

There are problems with the approach adopted by all of the identified prior art. Thus, the prior art systems seek to inhibit recording, that is, to impair the quality of the recording made of a modified video signal. However, in some instances, the impairment may be so small as to effectively provide no protection against improper copying. Furthermore, with the prior art proposals, the modified signals present on original recordings cause adjustment of the gain of the playback machine and may therefore provide problems playing the original material.

As VCR's become more sophisticated, for example, including dubbing (separate playback and recording) systems, the likelihood that video tapes will be copied increases.

The present invention seeks to provide method and apparatus for recording video signals in which recording of modified signals is inhibited. but which reduces the problems identified above.

According to the present invention a method of recording video signals as defined above is characterised in that said selected waveform comprises at least one pseudo-sync pulse extending from the blanking reference level to the sync tip level added to the vertical blanking interval of the unmodified video signal following a sync pulse, and in that the recording is disabled in response to said detection of said added selected waveform.

With a method of the invention, recording of modified video signals is not simply impaired as previously, but rather is disabled.

Thus, when modified video signals are detected, the recording device is disabled. Thus, when video tapes are originally recorded with a recognizable, copy-protecting modified waveform, the tape recording device may be completely disabled so that it cannot record the video signal at all.

In a preferred embodiment. the recording is disabled by generating a control signal indicating the presence of the added selected waveform in the received video signal, and preventing the recording device from recording the received video signal when the control signal indicates the presence of the selected waveform in the video signal.

Preferably, said method further comprises generating a control signal indicating the absence of the selected waveform in the video signal, and enabling the recording device to record the video signal when the control signal indicates the absence of the selected waveform in the video signal.

Preferably, said selected waveform comprises at least one selected pulse added to the vertical blanking interval of the video signal following a sync pulse.

In an embodiment, said selected waveform comprises a plurality of pulses added following the sync pulse, and wherein the presence of said selected waveform is detected by generating a signal having a voltage proportional to the frequency of the plurality of pulses following the sync pulse, sampling the generated signal when it has a voltage proportional to the selected-pulse frequency, and holding the value of the sample for a minimum predetermined period of time.

In an alternative embodiment, said selected waveform comprises a pseudo-sync pulse after the sync pulse and a positive pulse after each pseudo-sync pulse and within the blanking interval such that the amplitude differential between each pseudo-sync pulse and associated positive pulse is different to the normal amplitude differential between the sync pulse and the blanking interval following the sync pulse, and wherein the presence of said selected waveform is detected by detecting the amplitude differential between each pseudo-sync pulse and the associated positive pulse.

The invention also extends to tape recording apparatus for recording video signals, the apparatus being arranged such that unmodified video signals are recorded, whereas satisfactory recording of modified signals is inhibited, the modified video signals having a selected waveform added to a blanking interval, the apparatus comprising input means for receiving a video signal, recording means coupled to said input means for recording video signals on the recording medium, and means arranged to detect the presence of said added selected waveform in a received video signal and in response to inhibit recording of the modified video signal, characterised in that the selected waveform comprises at least one pseudo-sync pulse extending from the blanking reference level to the sync tip level added to the vertical blanking interval of the unmodified video signal, and in that said detecting means comprises disabling means coupled to said input means and to said recording means and arranged to disable said recording means in response to the detection of said added selected waveform.

Preferably, said disabling means is arranged to generate a control signal for disabling said recording means.

In an embodiment, arranged to prohibit recording of modified video signals having a selected waveform which comprises at least one pair of a pseudo-sync pulse and a positive pulse, the pseudo-sync pulse following the sync pulse and the positive pulse following the pseudo-sync pulse, the difference in amplitude between the pseudo-sync pulse and the positive pulse being different to the normal amplitude difference between the sync pulse and the blanking interval, said disabling means comprises means for detecting the amplitude difference between each pseudo-sync pulse and the associated positive pulse.

For example, said disabling means may comprise means for holding a voltage representative of the amplitude difference between each pseudo-sync pulse and the associated positive pulse a minimum predetermined period of time.

In an altemative embodiment, arranged to prohibit recording of modified video signals having a selected waveform which comprises a plurality of pseudo-sync pulses added after the sync pulse, said disabling means comprises means for detecting the frequency of the plurality of pseudo-sync pulses.

Said apparatus may further comprise means for generating a voltage representative of the frequency of the pseudo-sync pulses, and means for holding the voltage representative of the pseudo-sync pulse frequency a minimum predetermined period of time.

Embodiments of the present invention will hereinafter be described, by way of example, with reference to the accompanying drawings, in which:-
Figure 1 shows a simplified block diagram for preventing recording of a video signal comprising apparatus of the present invention,
Figure 2 shows a more detailed block diagram of a recording disabling apparatus usable in the system of Figure 1,
Figure 3 shows illustrations of waveforms present at selected points in the exemplary apparatus of Figure 2,
Figure 4 is an illustration of one of the waveforms shown of Figure 3 with an extended time scale, and
Figures 5 and 6 show block diagrams of alternative embodiments of a recording disabling apparatus usable in the system of Figure 1.

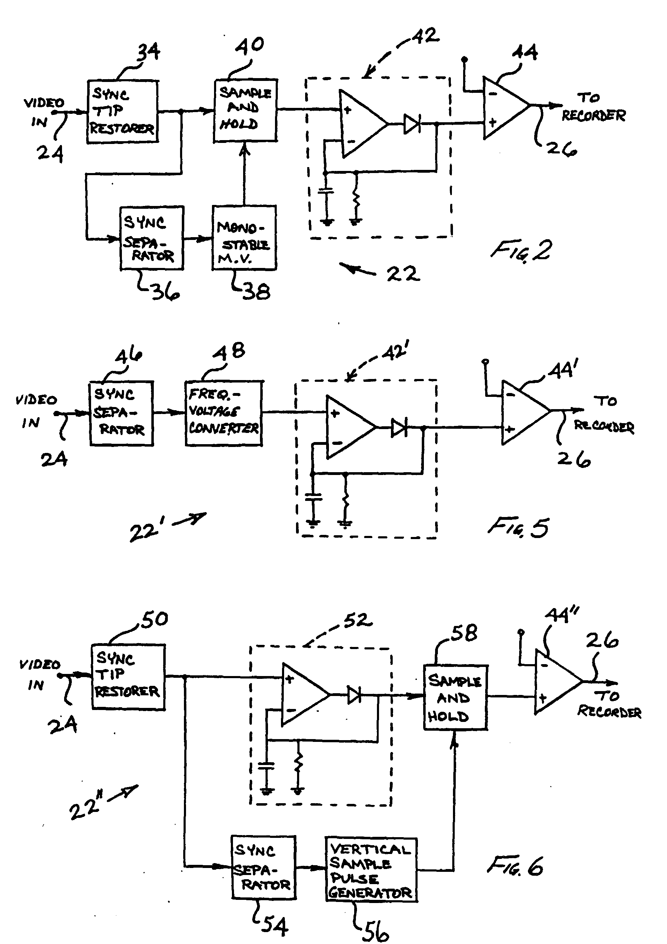

Referring initially to Figure 1, a system for preventing the copying of a video program is shown generally at 10. Initially, a conventional video signal is input to a video signal modifier 12. The modifier 12 is preferably the apparatus described in previously referenced United States Patent No. 4,631,603. The modifier adds a selected waveform to a conventional video signal which it is desired not be copied. The modified video signal is conveyed to a video tape recorder or more commonly, a video cassette recorder (VCR) 14 for recording on a magnetic tape 16 or other suitable recording medium. The video signal may be conveyed from modifier 12 by recording the modified signal on a video tape, such as a video cassette, which is played into VCR 14. Alternatively, it may be broadcast over a cable or other broadcast system and received at a tuner in the VCR.

Conventional video cassette recorders include an input 18 which may include a tuner, for receiving input video signals and a recording device 20 coupled to input 18 for recording the received video signal on tape 16. In the VCR of the present invention, what is referred to as a disabler 22 is also included. Disabler 22 receives the video signal from input 18 on a lead 24, detects whether the video signal is a modified signal and outputs a corresponding control signal on a lead 26 coupled to recording device 20. The recording device is prohibited from recording when the modified video signal is detected. Otherwise, a signal is output on lead 26 which enables recorder 20 to record the video signal.

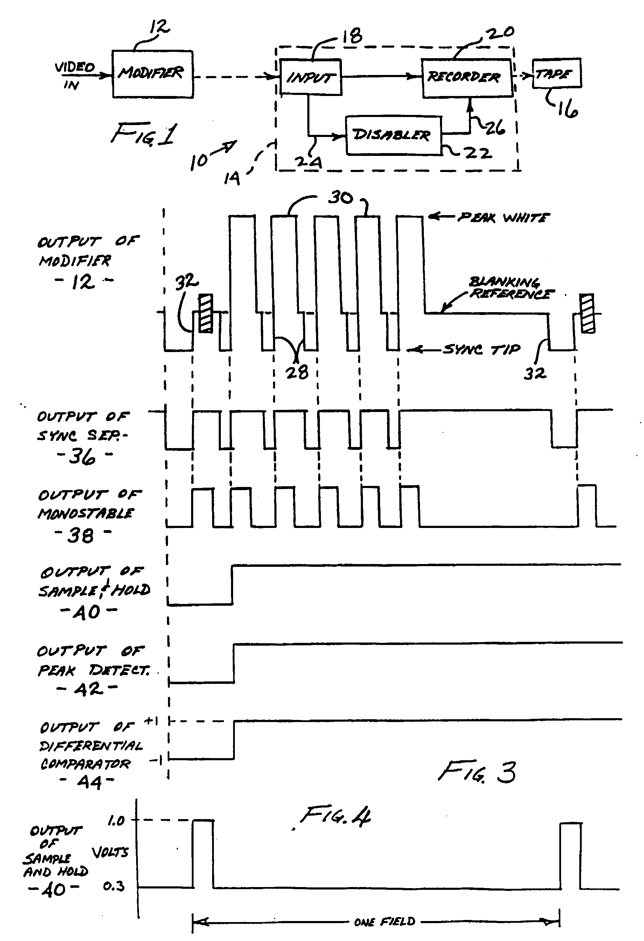

Fig. 2 illustrates a preferred embodiment of disabler 22. However, before describing the embodiment shown in Fig. 2, it is important to understand the form of the modified video signal detected by the preferred embodiment of disabler 22. This copy-protecting signal, is one which is produced by the apparatus described in U.S. Patent 4,631,603. That system addes a plurality of ordered pairs of what are referred to as pseudo-sync pulses and white pulses to selected lines of the vertical blanking interval after the normal sync pulses. The top waveform of Fig. 3 illustrates a modified video signal having a set of five ordered pairs of pseudo-sync pulses 28 and white pulses 30 added to a line of the vertical blanking interval after a normal sync pulse 32. Generally, it is preferred that seven or more lines are modified to provide a total of about 35 or more pulse pairs per field. The pseudo-sync pulses 28 are so named because they extend from the blanking reference level to the sync tip level as do the normal sync pulses 32. They preferably have a duration of about two microseconds and are immediately followed by the white pulses 30, so named because they typically reach peak white level or beyond. The white pulses have a duration of about four microseconds. Input 18 normalizes the input video signal so that it has a 1 volt peak-to-peak amplitude. The back porch of the normalized sync pulse is 0.3 volts above sync tip. The back porches of the pseudo-sync pulses, as determined by the white pulses, are about 1 volt above sync tip.

There is thus provided a waveform which is distinctive of the conventional vertical blanking interval. It is distinctive, both as to the voltage differential between the sync tip and the peak white level as well as the frequency of the pulses. It will be appreciated that variations can be made in these waveforms or that other identifiable waveforms may be used.

Referring to Fig. 2, the input video signal on lead 24 is input to a sync tip restorer 34 which clamps the sync tips to a reference level, preferably 0 volts. The output of the sync tip restorer has the same waveform as does the output of modifier 12. The output waveform of the various circuits shown in Fig. 2 are illustrated in Fig. 3. The output of restorer 34 is connected to a sync separator 36 which produces an output of sync pulses. These sync pulses are fed to a monostable multivibrator 38. The multivibrator is triggered by the trailing edges of the input sync pulses to generate nominally three microsecond sampling pulses. These pulses activate a sample and hold circuit 40 which receives the output of sync tip restorer 34. Thus, sample and hold circuit 40 generates an output which represents the voltage level of the white pulses in the modified video signal and holds it for at least the duration of one line (63.55 microseconds) so that the pseudo-sync and white pulse pairs may be detected in the following line and a continuous voltage level held by circuit 40. The resultant output of sample and hold circuit 40 is shown more clearly in Fig. 4 which shows it having a level of 0.3 volts during normal video horizontal lines and a level of 1 volt for those lines in the vertical blanking interval having the modified signal.

The output of sample and hold circuit 40 is applied to the positive input of a positive peak detector 42 which holds its most positive value for the duration of several fields. This assures that the output will have a value throughout the receipt of the modified video signal so that no part of the video signal can be recorded. The output of peak detector 42 is thus a constant voltage of about +0.3 volts in the case of a normal video signal and about +1.0 volt in the case of a copy-protecting modified video signal in the embodiment illustrated herein.

The output of detector 42 is joined to the positive input of a differential comparator 44. The negative input of comparator 44 is preferably connected to a positive 0.5 volt reference voltage source. Comparator 44 thereby produces an output on lead 26 having a logic level which is high in the case of a modified or copy-protected video signal and low in the case of a normal video signal. As described previously with reference to Fig. 1, the logic signal at the output of comparator 44 is coupled to the record enable system of the VCR in such a manner as to prohibit or disable recording when in the high state, and enable recording when in the low state. In its simplest form, such an enable system is in the form of a switch connected in line with the recording device.

Each of the circuit blocks of Figs. 1 and 2 other than the modifier, which is described in U.S. Patent 4,631,603, are well known to persons of ordinary skill in the art and do not form an aspect of the present invention, other than in combination with the other circuits as described. Therefore, they are not discussed in further detail.

Referring now to Fig. 5, an alternative embodiment of disabler 22, shown as 22', is illustrated. The method of this embodiment relies on detecting the presence of the tightly grouped pseudo-sync pulses. Thus, although it is operable on the modified video signal waveform shown in Fig. 3, it will be appreciated that the white pulses are not utilized specifically, and therefore could be deleted. Further, other forms of waveform could be used which also produce a frequency distinguishable from the frequency of normal sync pulses.

In particular, the video signal received on lead 24 is input to a sync separator 46 which produces an output similar to that of sync separator 36. The resulting series of pulses is input to a frequency-to-voltage convertor 48. Convertor 48 generates an output voltage proportional to the frequency of its input pulses. The output of convertor 48 will thus have the general characteristics of the waveform of Fig. 4 in that it will be most positive during the vertical interval region corresponding to the increased sync frequency. The output of convertor 48 is coupled to a positive peak detector 42' and differential comparator 44' in the same arrangement as peak detector 42 and comparator 44 of Fig. 2. This gives rise to the same logic level indication of the presence or absence of the modified or copy-protected video signal as was discussed with reference to the embodiment of Fig. 2.

Fig. 6 shows yet a third exemplary embodiment of a disabler, shown as 22". Disabler 22" functions similar to disabler 22 in that it detects the presence of the pseudo-sync and white pulse pairs by determining the voltage differential between each pseudo-sync pulse and paired white pulse.

Specifically, the video signal is input from lead 24 to a sync tip restorer 50, the output of which is applied to a positive peak detector 52 having a fast charge time constant (less than 1 microsecond) and a long discharge time (about 100 microseconds). The output of sync tip restorer 50 is also connected to a sync separator 54 for generating an output waveform similar to that of sync separator 36 described with reference to Figs. 2 and 3. The output of separator 54 is coupled to a vertical sample pulse generator 56. Generator 56 produces a series of sampling pulses for activating a sample and hold circuit 58. Circuit 58 receives as input the output of peak detector 52. Thus, the output of the positive peak detector is sampled in sample and hold circuit 58 during the vertical interval at a time which coincides with the occurrence of the anti-copying waveform.

It can be seen that the output of circuit 58 will be at +0.3 volts in the case of a normal video signal and at about +1.0 volt in the case of a video signal modified or copy-protected as described herein. The output of sample and hold circuit 58 is converted to logic levels as described with reference to the embodiment of Fig. 2 by a differential comparator 44".

It can be seen that the outputs of all three embodiments of the disabler illustrated in Figs. 2, 5 and 6 correspond to those of the waveform shown in Fig. 3 for differential comparator 44. A system is thus described wherein a video signal, modified as shown in United States Patent No. 4,631,603 is positively prohibited from being recorded. By incorporating detection circuitry or disablers in commercial VCRs, particularly in more sophisticated recorders which include dubbing decks, it will be possible for recorded video tape producers to produce copy-protected video signals which may be viewed without impairment on a television receiver but which cannot be copied on the video recorder.

The foregoing describes a method for copy protecting a video signal. With this method, a television receiver produces a normal color picture from the modified signal whereas a video tape recorder having a recording disabling circuit according to the present invention prevents the recording of the modified video signal. Many different forms of video-signal-modifying waveforms and disabler circuits are possible for practicing the method of this invention. The particular circuitry shown is by way of example only. All such modifications and variations which would occur to one of the ordinary skill in the art are included within the scope of the present invention as defined in the attached claims.

## Claims

1. A method of recording video signals arranged such that unmodified video signals are recorded, whereas recording of modified video signals is inhibited, the modified video signals having a selected waveform (28, 30) added to a blanking interval, the method comprising the steps of receiving video signals in a video signal recording device (14), and detecting the presence of said added selected waveform (28, 30) to inhibit recording, characterised in that said selected waveform (28, 30) comprises at least one pseudo-sync pulse (28) extending from the blanking reference level to the sync tip level added to the vertical blanking interval of the unmodified video signal following a sync pulse (32), and in that the recording is disabled in response to said detection of said added selected waveform.

2. A method as claimed in Claim 1, wherein said selected waveform (28, 30) comprises a plurality of pseudo-sync pulses (28) added following the sync pulse (32), and wherein the presence of said selected waveform is detected by generating a signal having a voltage proportional to the frequency of the plurality of pseudo-sync pulses (28) following the sync pulse (32), sampling the generated signal when it has a voltage proportional to the selected-pulse frequency, and holding the value of the sample for a minimum predetermined period of time.

3. A method as claimed in Claim 1, wherein said selected waveform (28, 30) comprises a pseudo-sync pulse (28) after the sync pulse (32) and a positive pulse (30) after each pseudo-sync pulse (28) and within the blanking interval such that the amplitude differential between each pseudo-sync pulse (28) and associated positive pulse (30) is different to the normal amplitude differential between the sync pulse (32) and the blanking interval following the sync pulse, and wherein the presence of said selected waveform is detected by detecting the amplitude differential between each pseudo-sync pulse (28) and the associated positive pulse (30).

4. A method as claimed in Claim 3, wherein the detecting of the amplitude differential comprises the steps of sampling the voltage of the video signal after each pseudo-sync pulse (28) at a time when a corresponding positive pulse (30) is present, and holding the value of the sample for at least a minimum predetermined period of time.

5. A method as claimed in Claim 2 or 4, wherein the predetermined period of time is at least the duration of a line of the video signal.

6. A method as claimed in Claim 2 or 4, wherein the predetermined period of time is at least the duration of a field of the video signal.

7. A method as claimed in Claim 1, wherein said added selected waveform (28, 30) comprises a plurality of pseudo-sync pulses (28) following a sync pulse (32), and wherein the presence of said selected waveform is detected by generating a signal representative of the frequency of the plurality of pseudo-sync pulses (28) following the sync pulse (32).

8. A method as claimed in Claim 7, wherein said frequency-representative signal is generated to have a voltage proportional to the frequency of said pseudo-sync pulses.

9. A method as claimed in Claim 8, further comprising sampling the frequency-representative signal when it has a voltage proportional to the frequency of said pseudo-sync pulses, and holding the value of the sample for a minimum predetermined period of time.

10. A method as claimed in Claim 9, wherein said minimum predetermined period of time is at least the duration of a field of the video signal.

11. A method as claimed in any preceding claim, wherein said added selected waveform further comprises at least one positive pulse (30) having an amplitude greater than the normal blanking reference level.

12. A method as claimed in Claim 11, wherein detecting the presence of said selected waveform comprises detecting the peak amplitude of the video signal and sampling the peak-detected signal during the blanking interval.

13. A method as claimed in any preceding claim, wherein the recording is disabled by generating a control signal indicating the presence of the added selected waveform (28, 30) in the received video signal, and preventing the recording device (14) from recording the received video signal when the control signal indicates the presence of the selected waveform (28, 30) in the video signal.

14. A method as claimed in Claim 13, further comprising generating a control signal indicating the absence of the selected waveform (28, 30) in the video signal, and enabling the recording device (14) to record the video signal when the control signal indicates the absence of the selected waveform (28, 30) in the video signal.

15. Tape recording apparatus for recording video signals, the apparatus being arranged such that unmodified video signals are recorded, whereas satisfactory recording of modified signals is inhibited, the modified video signals having a selected waveform (28, 30) added to a blanking interval, the apparatus comprising input means (18) for receiving a video signal, recording means (20) coupled to said input means for recording video signals on the recording medium (16), and means (22) arranged to detect the presence of said added selected waveform in a received video signal and in response to inhibit recording of the modified video signal, characterised in that said selected waveform (28, 30) comprises at least one pseudo-sync pulse (28) extending from the blanking reference level to the sync tip level added to the vertical blanking interval of the unmodified video signal, and in that said detecting means comprises disabling means (22) coupled to said input means (18) and to said recording means (20) and arranged to disable said recording means (20) in response to the detection of said added selected waveform.

16. A tape recording apparatus as claimed in Claim 15, arranged to prohibit recording of modified video signals having a selected waveform which comprises at least one pair of a pseudo-sync pulse and a positive pulse, the pseudo-sync pulse following the sync pulse and the positive pulse following the pseudo-sync pulse, the difference in amplitude between the pseudo-sync pulse and the positive pulse being different to the normal amplitude difference between the sync pulse and the blanking interval, wherein said disabling means (22) comprises means for detecting the amplitude difference between each pseudo-sync pulse and the associated positive pulse.

17. A tape recording apparatus as claimed in Claim 16, wherein said disabling means (22) comprises means (42) for holding a voltage representative of the amplitude difference between each pseudo-sync pulse and the associated positive pulse a minimum predetermined period of time.

18. A tape recording apparatus as claimed in Claim 15, arranged to prohibit recording of modified video signals having a selected waveform which comprises a plurality of pseudo-sync pulses (28) added after the sync pulse, wherein said disabling means (22) comprising means (48, 42) for detecting the frequency of the plurality of pseudo-sync pulses.

19. A tape recording apparatus as claimed in Claim 18, further comprising means (44) for generating a voltage representative of the frequency of the pseudo-sync pulses.

20. A tape recording apparatus as claimed in Claim 19, further comprising means (42') for holding the voltage representative of the pseudo-sync pulse frequency a minimum predetermined period of time.

21. A tape recorder according to Claim 17 or Claim 20, wherein the minimum predetermined period of time is the duration of one line of the video signal.

22. A tape recorder according to Claim 17 or Claim 20, wherein the minimum predetermined period of time is at least equal to the duration of a field of the video signal.

23. A tape recording apparatus as claimed in Claim 15, arranged to prohibit recording of modified video signals having a selected waveform which additionally comprises at least one positive pulse added after the sync pulse and having an amplitude greater than the normal blanking reference level, wherein said disabling means (22) comprises means (42) for detecting the peak amplitude of the video signal.

24. A tape recording apparatus as claimed in Claim 23, wherein said detecting means also samples the peak-detected signal during the blanking interval.

25. A tape recording apparatus as claimed in any of Claims 15 to 24, wherein, in response to the detection of the presence of said added selected waveform, said disabling means (22) is arranged to generate a control signal for disabling said recording means (20).

## Patentansprüche

1. Verfahren zum Aufzeichnen von Videosignalen, die derart angeordnet sind, daß unveränderte Videosignale aufgezeichnet werden, während das Aufzeichnen von veränderten Videosignalen verhindert wird, wobei die veränderten Videosignale eine ausgewählte Wellenform (28, 30) zu einem Austastintervall hinzugefügt haben, wobei das Verfahren die Schritte umfaßt: Empfangen von Videosignalen in einem Videosignal-Aufzeichnungsgerät (14), und Erkennen des Vorhandenseins der hinzugefügten, ausgewählten Wellenform (28, 30) zur Verhinderung des Aufzeichnens, dadurch gekennzeichnet, daß die ausgewählte Wellenform (28, 30) mindestens einen Pseudosychroniasationsimpuls (28, 30) aufweist, der sich von dem Austastbezugspegel bis zu dem Sychronisationsspitzenpegel erstreckt und der zu dem vertikalen Austastintervall des unveränderten Videosignals anschließend an einen Synchronisationsimpuls (32) hinzugefügt wird und daß die Aufzeichnung in Abhängigkeit von der Erkennung der hinzugefügten, ausgewählten Wellenform verhindert wird.

2. Verfahren nach Anspruch 1, wobei die ausgewählte Wellenform (28, 30) eine Anzahl von Pseudosynchronisationsimpulsen (28) aufweist, die anschließend an den Synchronimpuls (32) hinzugefügt werden, und wobei das Vorliegen der ausgewählten Wellenform durch Erzeugen eines Signals erkannt wird, das eine Spannung proportional zur Frequenz der Anzahl der Pseudosynchronisationsimpulse (28) anschließend an die Synchronimpulse (32) hat, und wobei das erzeugte Signal abgefragt wird, wenn es eine Spannung proportional zu der ausgewählten Impulsfrequenz hat, und daß der Wert der Abfrage über eine vorgegebene Mindestzeitspanne festgehalten wird.

3. Verfahren nach Anspruch 1, wobei die ausgewählte Wellenform (28, 30) einen Pseudosynchronisationsimpuls (28) nach dem Synchronisationsimpuls (32) und einen positiven Impuls (30) nach jedem Pseudosynchronisationsimpuls (28) und innerhalb des Austastintervalls derart hat, daß die Amplitudendifferenz zwischen jedem Pseudosynchronisationsimpuls (28) und dem zugehörigen positiven Impuls (30) von der normalen Amplitudendifferenz zwischen dem Synchronisationsimpuls (32) und dem Austastintervall nach dem Synchronisationsimpuls verschieden ist, und wobei das Vorliegen der ausgewählten Wellenform erkannt wird, indem die Amplitudendifferenz zwischen jedem Pseudosynchronisationsimpuls (28) und dem zugehörigen positiven Impuls (30) ermittelt wird.

4. Verfahren nach Anspruch 3, wobei das Erkennen der Amplitudendifferenz die Schritte umfaßt: Abfragen der Spannung des Videosignals nach jedem Pseudosynchronisationsimpuls (28) zu einem Zeitpunkt, wenn ein entsprechender positiver Impuls (30) vorliegt, und Halten des Wertes der Abfrage über zumindest eine vorgegebene Mindestzeitspanne.

5. Verfahren nach Anspruch 2 oder 4, wobei die vorgegebene Zeitspanne mindestens die Dauer einer Zeile des Videosignals ist.

6. Verfahren nach Anspruch 2 oder 4, wobei die vorgegebene Zeitspanne mindestens die Dauer eines Feldes des Videosignals ist.

7. Verfahren nach Anspruch 1, wobei die hinzugefügte, ausgewählte Wellenform (28, 30) eine Anzahl von Pseudosychronimpulsen (28) nach einem Synchronisationsimpuls (32) darstellt, und wobei das Vorliegen der ausgewählten Wellenform erkannt wird, indem ein Signal erzeugt wird, das die Frequenz der Anzahl der Pseudosychronisationsimpulse (28) nach dem Synchronisationsimpuls (32) erzeugt wird.

8. Verfahren nach Anspruch 7, wobei das Frequenz darstellende Signal so erzeugt wird, daß es eine Spannung proportional zu der Frequenz der Pseudosychronisationsimpulse hat.

9. Verfahren nach Anspruch 8, ferner durch Abfragen des Frequenz darstellenden Signals, wenn es eine Frequenz proportional zu der Frequenz der Pseudosychronisationsimpulse hat, und Halten des Wertes der Abfrage über eine vorgegebene Mindestzeitspanne.

10. Verfahren nach Anspruch 9, wobei die vorgegebene Mindestzeitspanne zumindest die Dauer eines Halbbildes des Videosignals ist.

11. Verfahren nach einem der vorhergehenden Ansprüche, wobei die hinzugefügte, ausgewählte Wellenform zumindest einen positiven Impuls (30) aufweist, dessen Amplitude größer als der normale Austastreferenzpegel ist.

12. Verfahren nach Anspruch 11, wobei das Erkennen der Anwesenheit der ausgewählten Wellenform das Erkennen der höchsten Amplitude des Videosignals und das Abfragen des erkannten Spitzensignals während des Austastintervalls umfaßt.

13. Verfahren nach einem der vorhergehenden Ansprüche, wobei das Aufzeichnen verhindert wird, indem ein Steuersignal erzeugt wird, das das Vorliegen der hinzugefügten, ausgewählten Wellenform (28, 30) in dem empfangenen Videosignal anzeigt, und wobei verhindert wird, daß das Aufzeichnungsgerät (14) das empfangene Videosignal aufzeichnet, wenn das Steuersignal das Vorliegen der ausgewählten Wellenform (28, 30) in dem Videosignal anzeigt.

14. Verfahren nach Anspruch 13, ferner durch Erzeugen eines Steuersignals, das das Fehlen der ausgewählten Wellenform (28, 30) in dem Videosignal anzeigt, und durch Freigeben des Aufzeichnungsgeräts (14) zum Aufzeichnen des Videosignals, wenn das Steuersignal das Fehlen der ausgewählten Wellenform (28, 30) in dem Videosignal anzeigt.

15. Bandaufzeichnungsvorrichtung zum Aufzeichnen von Videosignalen, wobei die Vorrichtung so angeordnet ist, daß unmodifizierte Videosignale aufgezeichnet werden, während das zufriedenstellende Aufzeichnen von modifizierten Signalen verhindert wird, wobei die modifizierten Videosignale eine ausgewählte Wellenform (28, 30) haben, die zu einem Austastintervall hinzugefügt werden, und wobei die Vorrichtung Eingabemittel (18) zum Empfangen eines Videosignals, Aufzeichnungsmittel (20), die an die Eingabemittel angeschlossen sind und die zum Aufzeichnen der Videosignale auf dem Aufzeichnungsmittel (16) dienen, und Mittel (22) aufweist, die so angeordnet sind, daß sie das Vorhandensein der hinzugefügten, ausgewählten Wellenform in einem empfangenen Videosignal erkennen und in Abhängigkeit davon das Aufzeichnen des modifizierten Videosignals sperren, dadurch gekennzeichnet, daß die ausgewählte Wellenform (28, 30) mindestens einen Pseudosychronisationsimpuls (28) aufweist, der sich von dem Austastbezugspegel bis zu dem Sychronisationsspitzenpegel erstreckt und der zu der Vertikalaustastlücke des unveränderten Videosignals hinzugefügt ist, und daß das Erkennungsmittel Sperrmittel (22) aufweist, die an die Eingabemittel (18) und an die Aufzeichnungsmittel (20) angeschlossen und so angeordnet sind, daß sie das Aufzeichnungsmittel (20) in Abhängigkeit von der Erkennung der hinzugefügten, ausgewählten Wellenform sperren.

16. Bandaufzeichnungsvorrichtung nach Anspruch 15, die so angeordnet ist, daß sie das Aufzeichnen von modifizierten Videosignalen verhindert, die eine ausgewählte Wellenform mit mindestens einem Paar von Pseudosynchronisationsimpulsen und einem positiven Impuls umfassen, wobei der Pseudosynchronisationsimpuls dem Synchronisationsimpuls folgt und der positive Impuls anschließend an den Pseudosynchronisationsimpuls folgt und wobei der Unterschied in der Amplitude zwischen dem Pseudosynchronisationsimpuls und dem positiven Impuls von der normalen Amplitudendifferenz zwischen dem Synchronisationsimpuls und dem Austastintervall verschieden sind, wobei das Sperrmittel (22) Mittel zum Erkennen der Amplitudendifferenz zwischen jedem Pseudosynchronisationsimpuls und dem zugehörigen positiven Impuls aufweist.

17. Bandaufzeichnungsvorrichtung nach Anspruch 16, wobei das Sperrmittel (22) Einrichtungen (42) zum Halten einer Spannung aufweist, die den Amplitudenunterschied zwischen jedem Pseudosynchronisationsimpuls und dem zugehörigen positiven Impuls über eine vorgegebene Mindestzeitspanne halten.

18. Bandaufzeichnungsvorrichtung nach Anspruch 15, die so angeordnet ist, daß sie das Aufzeichnen von modifizierten Videosignalen verhindert, die eine ausgewählte Wellenform haben, welche eine Anzahl von Pseudosynchronisationsimpulsen aufweist, die nach den Synchronisationsimpulsen hinzugefügt sind, wobei das Sperrmittel (22) Einrichtungen (48, 42) zum Erkennen der Frequenz der Anzahl von Pseudosynchronisationsimpulsen aufweist.

19. Bandaufzeichnungsvorrichtung nach Anspruch 18, ferner mit Einrichtungen (44) zum Erzeugen einer Spannung, die der Frequenz der Pseudosynchronisationsimpulse entspricht.

20. Bandaufzeichnungsvorrichtung nach Anspruch 19, ferner mit Einrichtungen (42'), um die Spannungsdarstellung der Pseudosynchronisationsimpulsfrequenz über eine vorgegebene Mindestzeitspanne zu halten.

21. Bandaufzeichnungsgerät nach Anspruch 17 oder 20, wobei die vorgegebene Mindestzeitspanne die Dauer einer Zeile des Videosignals ist.

22. Bandaufzeichnungsgerät nach Anspruch 17 oder 20, wobei die vorgegebene Mindestzeitspanne zumindest gleich wie die Dauer eines Halbbildes des Videosignals ist.

23. Bandaufzeichnungsvorrichtung nach Anspruch 15, die so angeordnet ist, daß das Aufzeichnen von modifizierten Videosignalen verhindert wird, die eine ausgewählte Wellenform haben, die zusätzlich mindestens einen positiven Impuls nach dem Synchronisationsimpuls hinzugefügt haben und bei denen eine Amplitude höher als der normale Austastreferenzpegel ist, wobei das Sperrmittel (22) Einrichtungen (42) aufweist, um die Spitzenamplitude des Videosignals zu erkennen.

24. Bandaufzeichnungsvorrichtung nach Anspruch 23, wobei das Erkennungsmittel außerdem das erkannte Spitzensignal während des Austastintervalls ebenfalls abfragt.

25. Bandaufzeichnungsvorrichtung nach einem der Ansprüche 15 bis 24, wobei in Abhängigkeit von der Erkennung des Vorliegens der hinzugefügten, ausgewählten Wellenform das Sperrmittel (22) so angeordnet ist, daß es ein Steuersignal zum Sperren des Aufzeichnungsmittels (20) erzeugt.

## Revendications

1. Enregistrement de signaux vidéo conçu de façon que des signaux vidéo non modifiés soient enregistrés, tandis que l'enregistrement de signaux vidéo modifiés est empêché, les signaux vidéo modifiés ayant une forme d'onde sélectionnée (28, 30) qui est ajoutée à un intervalle d'effacement, le procédé comprenant les étapes qui consistent à recevoir des signaux vidéo dans un dispositif (14) d'enregistrement de signaux vidéo, et à détecter la présence de ladite forme d'onde sélectionnée ajoutée (28, 30) pour empêcher l'enregistrement, caractérisé en ce que ladite forme d'onde sélectionnée (28, 30) comprend au moins une impulsion de pseudo-synchronisation (28) s'étendant du niveau de référence d'effacement jusqu'au niveau de pointe de synchronisation, ajoutée à l'intervalle d'effacement vertical du signal vidéo non modifié suivant une impulsion de synchronisation (32), et en ce que l'enregistrement est interdit sous l'effet de ladite détection de ladite forme d'onde sélectionnée ajoutée.

2. Procédé selon la revendication 1, dans lequel ladite forme d'onde sélectionnée (28, 30) comprend plusieurs impulsions (28) de pseudo-synchronisation ajoutées à la suite de l'impulsion de synchronisation (32), et dans lequel la présence de ladite forme d'onde sélectionnée est détectée par la génération d'un signal ayant une tension proportionnelle à la fréquence de l'ensemble d'impulsions (28) de pseudo-synchronisation suivant l'impulsion (32) de synchronisation, l'échantillonnage du signal généré lorsqu'il a une tension proportionnelle à la fréquence des impulsions sélectionnées, et le maintien de la valeur de l'échantillon pendant une période de temps minimale prédéterminée.

3. Procédé selon la revendication 1, dans lequel ladite forme d'onde sélectionnée (28, 30) comprend une impulsion de pseudo-synchronisation (28) après l'impulsion de synchronisation (32) et une impulsion positive (30) après chaque impulsion de pseudo-synchronisation (28) et pendant l'intervalle d'effacement de façon que la différence d'amplitude entre chaque impulsion de pseudo-synchronisation (28) et l'impulsion positive associée (30) soit différente de la différence d'amplitude normale entre l'impulsion de synchronisation (32) et l'intervalle d'effacement qui suit l'impulsion de synchronisation, et dans lequel la présence de ladite forme d'onde sélectionnée est détectée par détection de la différence d'amplitude entre chaque impulsion de pseudo-synchronisation (28) et l'impulsion positive associée (30).

4. Procédé selon la revendication 3, dans lequel la détection de la différence d'amplitude comprend les étapes qui consistent à échantillonner la tension du signal vidéo après chaque impulsion de pseudo-synchronisation (28) à un instant auquel une impulsion positive correspondante (30) est présente, et le maintien de la valeur de l'échantillon pendant au moins une période de temps minimale prédéterminée.

5. Procédé selon la revendication 2 ou 4, dans lequel la période de temps prédéterminée est au moins égale à la durée d'une ligne du signal vidéo.

6. Procédé selon la revendication 2 ou 4, dans lequel la période de temps prédéterminée est au moins égale à la durée d'une trame du signal vidéo.

7. Procédé selon la revendication 1, dans lequel ladite forme d'onde sélectionnée ajoutée (28, 30) comprend un ensemble d'impulsions de pseudo-synchronisation (28) faisant suite à une impulsion de synchronisation (32), et dans lequel la présence de ladite forme d'onde sélectionnée est détectée par la génération d'un signal représentatif de la fréquence de l'ensemble des impulsions de pseudo-synchronisation (28) suivant l'impulsion de synchronisation (32).

8. Procédé selon la revendication 7, dans lequel ledit signal représentatif de la fréquence est généré de façon à avoir une tension proportionnelle à la fréquence desdites impulsions de pseudo-synchronisation.

9. Procédé selon la revendication 8, comprenant en outre l'échantillonnage du signal représentatif de la fréquence lorsqu'il a une tension proportionnelle à la fréquence desdites impulsions de pseudo-synchronisation, et le maintien de la valeur de l'échantillon pendant une période de temps minimale prédéterminée.

10. Procédé selon la revendication 9, dans lequel ladite période de temps minimale prédéterminée est au moins égale à la durée d'une trame du signal vidéo.

11. Procédé selon l'une quelconque des revendications précédentes, dans lequel ladite forme d'onde sélectionnée ajoutée comprend en outre au moins une impulsion positive (30) ayant une amplitude supérieure au niveau de référence d'effacement normal.

12. Procédé selon la revendication 11, dans lequel la détection de la présence de ladite forme d'onde sélectionnée comprend la détection de l'amplitude de crête du signal vidéo et l'échantillonnage du signal de crête détecté pendant l'intervalle d'effacement.

13. Procédé selon l'une quelconque des revendications précédentes, dans lequel l'enregistrement est interdit par la génération d'un signal de commande indiquant la présence de la forme d'onde sélectionnée ajoutée (28, 30) dans le signal vidéo reçu, et l'empêchement du dispositif d'enregistrement (14) d'enregistrer le signal vidéo reçu lorsque le signal de commande indique la présence de la forme d'onde sélectionnée (28, 30) dans le signal vidéo.

14. Procédé selon la revendication 13, comprenant en outre la génération d'un signal de commande indiquant l'absence de la forme d'onde sélectionnée (28, 30) dans le signal vidéo, et l'autorisation, pour le dispositif d'enregistrement (14), d'enregistrer le signal vidéo lorsque le signal de commande indique l'absence de la forme d'onde sélectionnée (28, 30) dans le signal vidéo.

15. Appareil d'enregistrement à bande magnétique pour l'enregistrement de signaux vidéo, l'appareil étant conçu de façon à enregistrer des signaux vidéo non modifiés, tandis qu'un enregistrement satisfaisant de signaux modifiés est empêché, les signaux vidéo modifiés ayant une forme d'onde sélectionnée (28, 30) ajoutée à un intervalle d'effacement, l'appareil comportant des moyens d'entrée (18) destinés à recevoir un signal vidéo, des moyens d'enregistrement (20) connectés auxdits moyens d'entrée pour enregistrer des signaux vidéo sur le support d'enregistrement (16), et des moyens (22) qui sont conçus pour détecter la présence de ladite forme d'onde sélectionnée ajoutée dans un signal vidéo reçu et à réagir à la détection en empêchant l'enregistrement du signal vidéo modifié, caractérisé en ce que ladite forme d'onde sélectionnée (28, 30) comprend au moins une impulsion de pseudo-synchronisation (28) s'étendant depuis le niveau de référence d'effacement jusqu'au niveau de pointe de synchronisation, qui est ajoutée à l'intervalle d'effacement vertical du signal vidéo non modifié, et en ce que lesdits moyens de détection comprennent des moyens de mise hors fonction (22) connectés auxdits moyens d'entrée (18) et auxdits moyens d'enregistrement (20) et conçus pour mettre hors fonction lesdits moyens d'enregistrement (20) sous l'effet de la détection de ladite forme d'onde sélectionnée ajoutée.

16. Appareil d'enregistrement à bande magnétique selon la revendication 15, conçu pour empêcher l'enregistrement de signaux vidéo modifiés ayant une forme d'onde sélectionnée qui comprend au moins une paire d'une impulsion de pseudo-synchronisation et d'une impulsion positive, l'impulsion de pseudo-synchronisation suivant l'impulsion de synchronisation, et l'impulsion positive suivant l'impulsion de pseudo-synchronisation, la différence d'amplitude entre l'impulsion de pseudo-synchronisation et l'impulsion positive étant différente de la différence d'amplitude normale entre l'impulsion de synchronisation et l'intervalle d'effacement, dans lequel les moyens de mise hors fonction (22) comprennent des moyens qui sont destinés à détecter la différence d'amplitude entre chaque impulsion de pseudo-synchronisation et l'impulsion positive associée.

17. Appareil d'enregistrement à bande magnétique selon la revendication 16, dans lequel lesdits moyens de mise hors fonction (22) comprennent des moyens (42) qui sont destinés à maintenir pendant une durée minimale prédéterminée une tension représentative de la différence d'amplitude entre chaque impulsion de pseudo-synchronisation et l'impulsion positive associée.

18. Appareil d'enregistrement à bande magnétique selon la revendication 15, conçu pour empêcher l'enregistrement de signaux vidéo modifiés ayant une forme d'onde sélectionnée qui comprend un ensemble d'impulsions de pseudo-synchronisation (28) ajoutées après l'impulsion de synchronisation, dans lequel lesdits moyens de mise hors fonction (22) comprennent des moyens (48, 42) qui sont destinés à détecter la fréquence de l'ensemble d'impulsions de pseudo-synchronisation.

19. Appareil d'enregistrement à bande magnétique selon la revendication 18, comprenant en outre des moyens (44) destinés à générer une tension représentative de la fréquence des impulsions de pseudo-synchronisation.

20. Appareil d'enregistrement à bande magnétique selon la revendication 19, comprenant en outre des moyens (42') destinés à maintenir pendant une durée minimale prédéterminée la tension représentative de la fréquence des impulsions de pseudo-synchronisation.

21. Enregistreur à bande magnétique selon la revendication 17 ou la revendication 20, dans lequel la durée minimale prédéterminée est la durée d'une ligne du signal vidéo.

22. Enregistreur à bande magnétique selon la revendication 17 ou la revendication 20, dans lequel la durée minimale prédéterminée est au moins égale à la durée d'une trame du signal vidéo.

23. Appareil d'enregistrmeent à bande magnétique selon la revendication 15, conçu pour empêcher l'enregistrement de signaux vidéo modifiés ayant une forme d'onde sélectionnée qui comprend au moins une impulsion positive ajoutée après l'impulsion de synchronisation, et ayant une amplitude supérieure au niveau de référence d'effacement normal, dans lequel lesdits moyens de mise hors fonction (22) comprennent des moyens (42) qui sont destinés à détecter l'amplitude de crête du signal vidéo.

24. Appareil d'enregistrement à bande magnétique selon la revendication 23, dans lequel les moyens de détection échantillonnent également le signal qui résulte de la détection de crête, pendant l'intervalle d'effacement.

25. Appareil d'enregistrement à bande magnétique selon la revendication 15, dans lequel, sous l'effet de la détection de la présence de ladite forme d'onde sélectionnée ajoutée, lesdits moyens de mise hors fonction (22) sont conçus pour générer un signal de commande pour mettre hors fonction lesdits moyens d'enregistrement (20).
